# EUROPÄISCHE PATENTANMELDUNG

(11) **EP 0 711 695 A2**
(43) Veröffentlichungstag der Anmeldung: **15.05.1996**
(21) Anmeldenummer: 95114808.9
(22) Anmeldetag: 20.09.1995
(51) Int. Cl.: B60T 13/72, B60T 7/12

(54) **Elektronisch gesteuerte Fahrzeugbremsanlage und Verfahren zu deren Betrieb**

(30) Priorität: 14.10.1994 DE 4436819
(71) Anmelder: LUCAS INDUSTRIES PUBLIC LIMITED COMPANY, Solihull, West Midlands B91 3TX (GB)
(72) Erfinder: Heibel, Helmut, D-56424 Moschheim (DE)
(74) Vertreter: Schmidt, Steffen J., Dipl.-Ing.

(57) **Zusammenfassung**

Die Erfindung betrifft eine elektronisch gesteuerte Fahrzeugbremsanlage, mit einem eine elektromagnetisch betätigbare Steuerventilanordnung (20) aufweisenden Bremskraftverstärker (10), einer die Steuerventilanordnung (20) mit Steuersignalen für eine Auslösung oder Rücknahme einer automatischen Bremsung speisende elektronischen Steuereinrichtung (ECU), und einem die auf ein mit dem Bremskraftverstärker gekoppeltes Bremspedal wirkende Pedalbetätigungskraft erfassenden Kraftsensor (28), der mit mit der elektronischen Steuereinrichtung verbunden ist, dadurch gekennzeichnet, daß die elektronische Steuereinrichtung dazu eingerichtet ist, nach einer Auslösung einer automatischen Bremsung eine Rücknahme der Bremsung in Abhängigkeit von einer Verringerung der auf das Bremspedal wirkenden Pedalbetätigungskraft zu bewirken.

## Beschreibung

Die Erfindung betrifft eine elektronisch gesteuerte Fahrzeugbremsanlage mit einem eine elektromagnetisch betätigbare Steuerventilanordnung aufweisenden Bremskraftverstärker, einer die Steuerventilanordnung mit Steuersignalen für eine Auslösung oder Rücknahme einer automatischen Bremsung speisende elektronischen Steuereinrichtung (ECU), und einem die auf ein mit dem Bremskraftverstärker gekoppeltes Bremspedal wirkende Pedalbetätigungskraft erfassenden Kraftsensor, der mit der elektronischen Steuereinrichtung (ECU) verbunden ist.

Eine derartige Anordnung ist aus der DE 40 28 290 C1 bekannt, bei der die durch den Fahrer veranlaßte Betätigungsgeschwindigkeit als einziges Kriterium zur Auslösung eines automatischen Bremskraftvorganges herangezogen wird. Hierbei wird ein Vergleich der durch den Fahrer veranlaßten Betätigungsgeschwindigkeit des Bremspedals in dessen jeweiliger Stellung mit einem unveränderlichen Schwellwert ausgefüht und in Abhängigkeit von dem Vergleichsergebnis eine Notbremsung veranlaßt oder nicht. Um die Notbremsung zu beenden, wird bei dieser bekannten Vorgehensweise ein Richtungswechsel der Betätigungsgeschwindigkeit des Bremspedals als Kriterium zur Beendigung der Notbremsung verwendet.

Allerdings erfordert die Messung der Betätigungsgeschwindigkeit des Bremspedals eine Messung des Pedalbetätigungsweges mit anschließender Differenzierung des gemessenen Weges nach der Zeit. Gleiches gilt für die Erkennung der Richtungsumkehr. Dies bedeutet, daß ein Fahrer die Belastung des Bremspedals soweit zurücknehmen muß, daß dieses einen vorbestimmten Weg (in einer bestimmten Zeit) zurücklegt. Das hat zur Folge, daß der tatsächliche Wille des Fahrers, die Notbremsung abzubrechen, erst dann von der elektronischen Steuereinrichtung erkannt und in entsprechende Aktionen umgesetzt werden kann, wenn das Bremspedal um die vorbestimmte Weglänge zurückgenommen worden ist. Dies hat eine zeitlichen Verzögerung zur Folge, bevor der Abbruch der Notbremsung tatsächlich eintritt.

Aus der DE 41 02 496 A1 ist eine Bremsdruck-Steuereinrichtung bekannt, die die auf das Bremspedal ausgeübte Kraft oder als damit direkt korrelierte Größe den im hydraulischen Bremskreis erzeugten Bremsdruck mißt, um beim Überschreiten eines Schwellenwertes den Bremskreis zu sperren, in dem der erhöhte Bremsdruck gemessen wurde.

In diesem Dokument wird jedoch nur die Auslösung einer unterstützten Notbremsung beschrieben. Kriterien für die Beendigung der Notbremsung oder für die fahrerinitiierte Umwandlung der Notbremsung in eine Zielbremsung wird hierbei nicht beschrieben.

Eine Notbremsung ist dadurch definiert, daß der Bremskraftverstärker unabhängig von der tatsächlichen Pedalbetätigung den maximal möglichen Bremsdruck im Hydrauliksystem erzeugt, damit das Fahrzeug in der kürzestmöglichen Strecke zum Stillstand kommt. Eine Zielbremsung bedeutet die pedalbetätigungsabhängige Steuerung des Bremskraftverstärkers, um eine vom Fahrer definierte und von ihm über das Bremspedal gesteuerte Abbremsung des Fahrzeuges zu erreichen.

Der Erfindung liegt daher die Aufgabe zugrunde, eine Möglichkeit für eine möglichst sichere und verzögerungsfreie Erkennung des Fahrerwunsches, von einer Notbremsung in eine Zielbremsung überzugehen oder eine Notbremsung abzubrechen, zu schaffen.

Zur Lösung dieser Aufgabe ist die eingangs beschriebene elektronisch betriebene Fahrzeugbremsanlage durch eine elektronische Steuereinrichtung weitergebildet, die dazu eingerichtet ist, nach einer Auslösung einer automatischen Bremsung eine Rücknahme der Bremsung in Abhängigkeit von einer Verringerung der auf das Bremspedal wirkenden Pedalbetätigungskraft zu bewirken.

Der Erfindung liegt die unerwartete Beobachtung zugrunde, daß die Verringerung der auf das Bremspedal wirkenden Pedalbetätigungskraft gegenüber einer Messung der Verringerung der Pedalbetätigungsgeschwindigkeit mit einer wesentlich geringeren Zeitverzögerung erfaßt und ausgewertet werden kann, so daß dem Willen des Fahrers unmittelbarer entsprochen werden kann.

Um eine möglichst sichere Erkennung des Fahrerwillens für eine Rücknahme der automatischen Bremsung zu erkennen, ist die erfindungsgemäße Fahrzeugbremsanlage eingerichtet, die Rücknahme der Bremsung bei Erreichen eines vorbestimmten Schwellwertes der auf das Bremspedal wirkenden Pedalbetätigungskraft zu bewirken.

Bei einer bevorzugten Ausführungsform werden dabei von dem Kraftsensor kommende Signale permanent erfaßt, in der elektronischen Steuereinrichtung in Datenwerte umgewandelt und in einem Speicher abgespeichert, der der elektronischen Steuereinrichtung zugeordnet ist. Aus den abgespeicherten Daten wird ein unmittelbar vor einer Auslösung einer automatischen Bremsung erreichter Datenwert als momentaner Schwellwert bestimmt. Bei Verringerung der nach dem Auslösen der automatischen Bremsung aus den erfaßten Signalen umgewandelten Datenwerte auf den momentanen Schwellwert wird die Rücknahme der automatischen Bremsung bewirkt.

Um die Rücknahme komfortabel, d.h. möglichst ohne ruckartige Bewegungen des Fahrzeuges zu erreichen, wird vorzugsweise bei der Rücknahme der automatischen Bremsung die momentan auf das Bremspedal wirkende Betätigungskraft als Maß für die auf die Fahrzeugbremsen auszuübende Bremskraft herangezogen. Eine Verringerung der auf die Fahrzeugbremsen auszuübenden Bremskraft von der während der automatischen Bremsung ausgeübten Bremskraft auf die durch die aktuelle Bremspedalbetätigung vorgegebene Bremskraft wird innerhalb einer vorbestimmten Zeitspanne bewirkt, um einerseits dem Fahrerwillen zügig zu entsprechen und andererseits die Dosierung der Bremskraftverstärkung über das Bremspedal gefühlvoll zu ermöglichen.

Vorzugsweise wird die vorbestimmte Zeitspanne in Abhängigkeit von der momentanen Fahrzeuggeschwindigkeit, der Fahrzeugverzögerung oder der pedalbetätigungskraft festgelegt. Die momentane Fahrzeuggeschwindigkeit oder die Fahrzeugverzögerung können über die anderen Sensoren gemessen und entsprechende Meßwerte der elektronischen Steuereinrichtung zugeführt werden.

Wenn die Verringerung der auf die Fahrzeugbremsen auszuübenden Bremskraft von der während der automatischen Bremsung ausgeübten Bremskraft auf die durch die aktuelle Bremspedalbetätigung vorgegebene Bremskraft proportional zur momentanen Bremspedalbetätigungskraft ausgeführt wird, kann erreicht werden, daß die Verstärkerleistung des Bremskraftverstärkers pedalproportional reduziert wird, wodurch der Bremsvorgang in einem komfortablen Maß auf das normale, nicht durch die Notbremsung überlagerte Niveau zurückgeführt wird.

Bei dem erfindungsgemäßen Verfahren zum Betrieb einer elektronisch gesteuerten Fahrzeugbremsanlage wird eine Betätigungskraft erfaßt, die auf ein Bremspedal ausgeübt wird, das mit einem Bremskraftverstärker gekoppelt ist, der eine elektromagnetisch betätigbare Steuerventilanordnung aufweist. Eine automatische Bremsung wird ausgelöst, wenn ein vorbestimmtes Kritierium erfüllt ist. Eine Rücknahme der automatischen Bremsung erfolgt dann, wenn eine Verringerung der Pedalbetätigungskraft auftritt.

Die Rücknahme der automatischen Bremsung ist dann eingeleitet, wenn eine Verringerung der Pedalbetätigungskraft um einen vorbestimmten Wert auftritt.

Während des Betriebes wird die Pedalbetätigungskraft permanent erfaßt und der Wert der Pedalbetätigungskraft unmittelbar vor der Auslösung einer automatischen Bremsung wird als momentaner Schwellwert bestimmt. Die automatische Bremsung wird dann zurückgenommen, wenn eine Verringerung der nach dem Auslösen der automatischen Bremsung erfaßten Pedalbetätigungskraft auf den momentanen Schwellwert erfaßt wird.

Bei der Rücknahme der automatischen Bremsung wird die momentan auf das Bremspedal wirkende Betätigungskraft als Maß für die auf die Fahrzeugbremsen auszuübende Bremskraft ausgewertet.

Die Verringerung der auf die Fahrzeugbremsen auszuübende Bremskraft von der während der automatischen Bremsung ausgeübten Bremskraft auf die von der Pedalbetätigung vorgegebene Bremskraft wird innerhalb einer vorbestimmten Zeitspanne bewirkt. Die Verringerung kann auch in Abhängigkeit von der momentanen Fahrzeuggeschwindigkeit, Fahrzeugverzögerung oder Bremspedalbetätigungskraft festgelegt werden.

Bei einer bevorzugten Ausführungsform wird die Verringerung proportional zur momentanen Bremspedalbetätigungskraft ausgeführt.

Weitere Eigenschaften, Details und Vorteile der Erfindung werden unter Bezugnahme auf die beigefügten Zeichnungen nachstehend beschrieben.
- Fig. 1: zeigt einen elektronisch gesteuerten Bremskraftverstärker einer Fahrzeugbremsanlage gemäß der Erfindung in einer schematischen Schnittansicht.
- Fig. 2: zeigt ein Diagramm mit dem Druckverlauf in der hydraulischen Bremsanlage in Abhängigkeit von der Bremspedalbetätigungskraft bei einer automatischen Bremsung.

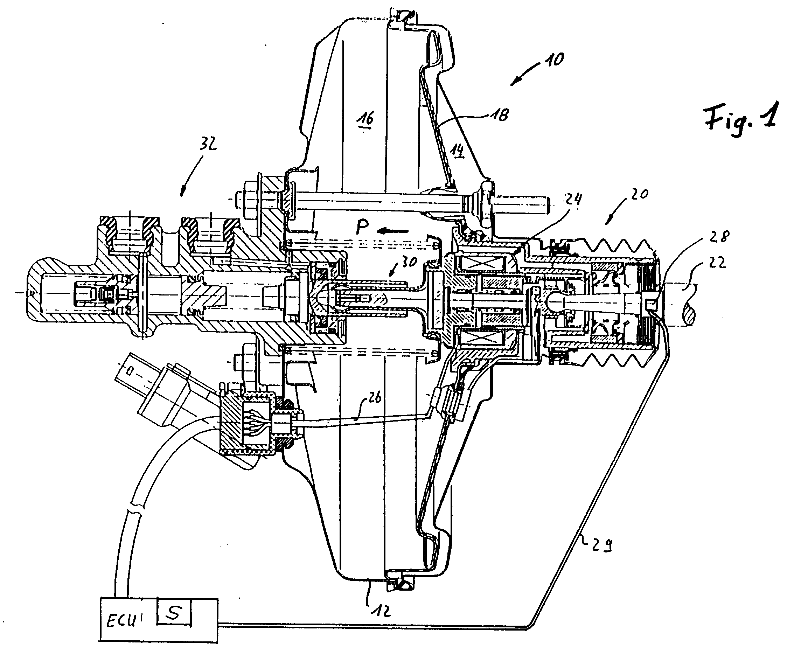

In Fig. 1 ist ein Bremskraftverstärker einer Fahrzeugbremsanlage im Überblick veranschaulicht. Der dargestellte Bremskraftverstärker 10 hat ein im wesentlichen rotationssymmetrisches Gehäuse 12, in dem eine hintere Kammer 14 sowie eine vordere Kammer 16 angeordnet und durch eine bewegliche Wand 18 voneinander getrennt sind. Zu dem Bremskraftverstärker 10 gehört eine Steuerventilanordnung 20, das mit der beweglichen Wand 18 zu gemeinsamer Relativbewegung in Bezug auf das Gehäuse 12 verbunden ist. Auf das Ventil wirkt das vordere Ende eines stangenförmigen Betätigungsgliedes 22, das im Einbauzustand mit einem (nicht gezeigten) Bremspedal des Kraftfahrzeuges verbunden ist.

Innerhalb des Bremskraftverstärkers 10 ist ein Kraftabgabeglied 30 angeordnet, das sich an der Steuerventilanordnung 20 abstützt. Das Kraftabgabeglied 30 ist zur Betätigung eines Hauptbremszylinders 32 vorgesehen.

In dem abgebildeten Ruhezustand, bei abgeschalteter Unterdruckquelle, herrscht in den beiden Kammern 14 und 16 Atmosphärendruck. Bei eingeschalteter Unterdruckquelle, also beispielsweise bei laufendem Motor, mit dessen Ansaugrohr die vordere Kammer 16 verbunden ist, entsteht in der vorderen Kammer 16 ein Unterdruck, so daß die bewegliche Wand 18, und mit ihr das Ventil, geringfügig nach vorne verschoben wird. Dadurch stellt sich ein erneutes Druckgleichgewicht zwischen den beiden Kammern 14 und 16 ein. Von dieser Bereitschaftsstellung aus ist eine verlustwegfreie Betätigung des Bremskraftverstärkers 10 gewährleistet.

Bei einer normalen Bremsbetätigung durch den Fahrer arbeitet der Bremskraftverstärker 10 in üblicher Weise, indem die Verbindung zwischen den beiden Kammern 14 und 16 über das Ventil unterbrochen wird und Umgebungsluft in die hintere Kammer 14 strömt. Infolgedessen steht eine durch den Bremskraftverstärker 10 verstärkte Betätigungskraft am Kraftabgabeglied 30 zur Verfügung.

Die Steuerventilanordnung 20 kann durch einen Elektormagneten 24 in einer Weise betätigt werden, daß die Steuerventilanordnung 20 entweder nur durch den Elektromagneten 24 aktiviert wird, oder zusätzlich zu einer Betätigung durch das Bremspedal über das Betätigungsglied 22. Dazu ist der Elektromagnet 24 über die Leitung 26 mit der elektronischen Steuereinrichtung ECU verbunden. An dem Betätigungsglied 22 ist ein Kraftsensor 28 vorgesehen, der über eine Leitung 29 ebenfalls mit der elektronischen Steuereinrichtung verbunden ist.

Der Kraftsensor 28 kann als Dehnungs-Meßstreifen oder als Drucksensor realisiert sein.

Dabei ist entscheidend, daß der Kraftsensor 28 an einer Stelle angeordnet ist, an der die gemessene Kraft (und deren zeitlicher Verlauf) noch möglichst genau mit der Kraft übereinstimmt, die der Fahrer auf das (nicht gezeigte) Bremspedal 10 ausübt. Das heißt, daß eine mehrfache Umlenkung, Übersetzung etc. der Kraft vor ihrer Messung zu vermeiden ist.

Als Kraftsensor ist z.B. ein Sensor verwendbar wie er in der P 43 00 995.6 beschrieben ist. Wenn der Fahrer das Bremspedal mit einer bestimmten Kraftanstiegsgeschwindigkeit oder mit einer bestimmten Bremspedalbetätigungsgeschwindigkeit betätigt, wird dies von der elektronischen Steuereinrichtung ECU (z.B. durch den Kraftsensor 28) erfaßt und ein Auslösesignal über die Leitung 26 an den Elektromagneten 24 geschickt. Dieses Signal bewirkt eine Verschiebung der Steuerventilanordnung 20, so daß Umgebungsluft in die Kammer 14 einströmen kann. Dies hat zur Folge, daß die bewegliche Wand 18 sich im Sinne einer Verkleinerung des Volumens der Kammer 16 bewegt und dabei das Kraftabgabeglied 30 in Richtung des Pfeiles P verschiebt. Die dabei auf den Hauptbremszylinder 32 ausgeübte Betätigungskraft ist unabhängig von der momentan noch auf das Bremspedal bzw. das Betätigungsglied 22 wirkenden Kraft. Vielmehr bewirkt die Betätigung des Elektromagneten 24 eine ungehinderte und schnelle Betätigung der Fahrzeugbremsen mit dem maximal möglichen Hydraulikdruck.

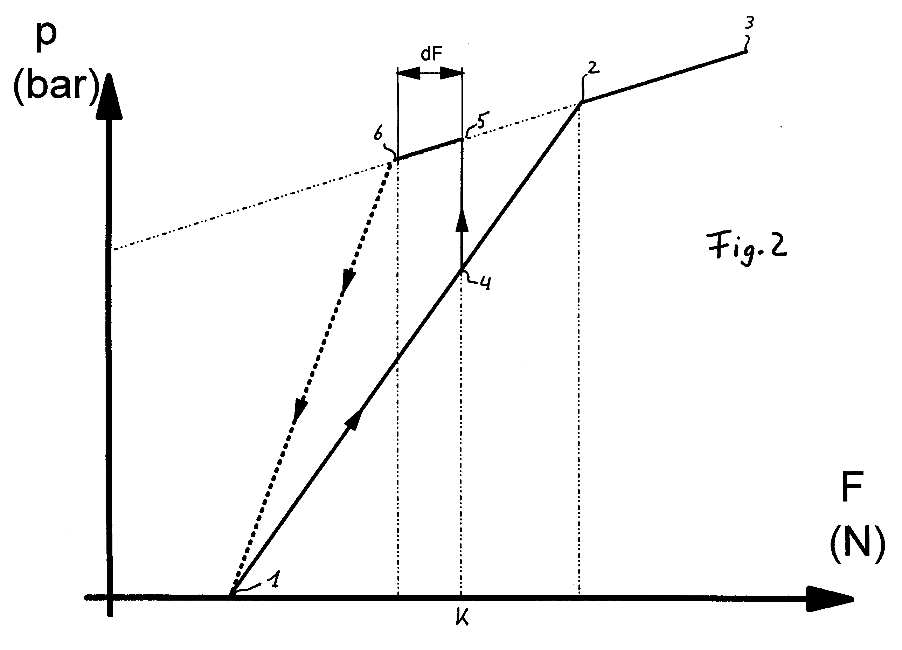

In Fig. 2 ist ein Verlauf eines Bremsvorganges mit einer automatischen Bremsung veranschaulicht. Ausgehend von dem Punkt 1 in Fig. 2 bewirkt sowohl die auf das Betätigungsglied 22 (vom Fahrer ausgeübte) Kraft, als auch die durch den Bremskraftverstärker 10 hervorgegangene Kraftverstärkung den steilen Druckanstieg des Drucks p in den Hydraulikleitungen zu den Fahrzeugbremsen. Die maximal mögliche durch den Bremskraftverstärker 10 bewirkbare Druckbeaufschlagung wird in dem mit 2 bezeichneten Punkt in Fig. 2 erreicht. Ein weiterer Anstieg (bis zu dem Punkt 3) ist nur noch durch ein weiteres Betätigen des Bremspedals möglich, wobei nur die vom Fahrer ausgeübte Kraft noch einen Anstieg des Drucks p bewirkt. Der Bremskraftverstärker leistet hierzu keinen weiteren Beitrag mehr.

Die erfindungsgemäße Betätigung der elektronisch gesteuerten Fahrzeugbremsanlage ist wie folgt:

Am Anfang einer Betätigung des Bremspedals (Punkt 1 in Fig. 2) steigt der Druck in der hydraulischen Bremsanlage relativ steil an, da die vom Fahrer auf das Bremspedal ausgeübte Kraft durch den Bremskraftverstärker 10 linear vestärkt wird. Beim Erreichen des Punktes 4 in Fig. 2 aktiviert die elektronische Steuerung ECU über die Leitung 26 den Elektromagneten 24, so daß der Bremskraftverstärker automatisch zur Ausführung einer Notbremsung betätigt wird, was in einem praktisch senkrechten Anstieg des Drucks in der hydraulischen Bremsanlage bis auf den Punkt 5 in Fig. 2 zur Folge hat. Der Fahrer hat in Punkt 5 zwei Möglichkeiten. Entweder er erhöht die Kraft auf das Bremspedal weiter, in diesem Fall würde der Druck in der hydraulischen Bremsanlage sich in Richtung auf den Punkt 2 in Fig. 1 entlang der gestrichelten Verbindungslinie zwischen dem Punkt 5 und dem Punkt 2 erhöhen. Wenn jedoch der Fahrer einen Abbruch der Notbremsung erreichen will, muß er die auf das Bremspedal wirkende Kraft um den Betrag dF verringern. Dies hat auch zur Folge, daß sich der Druck in der hydraulischen Bremsanlage auf den Punkt 6 in Fig. 2 reduziert. Sobald der zu dem Punkt 6 gehörige Wert der auf das Bremspedal ausgeübten Kraft erreicht ist, wird dies durch die elektronische Steuerung ECU mittels des Kraftsensors 28 erfaßt und eine Deaktivierung des Elektromagneten 24 ausgelöst. Dies bewirkt eine Rücknahme der Notbremsung und eine Rückführung des Bremsdrucks auf die normale Bremskraftverstärkungskennlinie (Punkt 1 in Fig. 2) entlang der gestrichelten Linie zwischen Punkt 6 und Punkt 1 in Fig. 2.

Das zur Auslösung der automatischen Bremsung zu füllende Kritierium ist das Erreichen des Punktes 4 bzw. der dazugehörige Kraftwert K. Wenn die Pedalbetätigungskraft um einen vorbestimmten Wert dF verringert wird bzw. wenn ein unmittelbar vor der Auslösung der automatischen (Not-)Brem-sung erfaßter auf das Bremspedal wirkender Kraftwert wieder gemessen wird (Punkt 6 in Fig. 2) erfolgt die Rücknahme der Notbremsung durch Entregung des Elektromagneten 24. Die Rückführung des Bremskraftverstärkers auf die normale Verstärkerkennlinie (Punkte 1-2-3) kann unterschiedlich schnell oder in Abhängigkeit von Umgebungskriterien (Fahrzeugverzögerung, Fahrzeuggeschwindigkeit oder dergl.) erfolgen.

## Patentansprüche

1. Elektronisch gesteuerte Fahrzeugbremsanlage, mit
- einem eine elektromagnetisch betätigbare Steuerventilanordnung (20) aufweisenden Bremskraftverstärker,
- einer die Steuerventilanordnung (20) mit Steuersignalen für eine Auslösung oder Rücknahme einer automatischen Bremsung speisende elektronischen Steuereinrichtung (ECU), und
- einem die auf ein mit dem Bremskraftverstärker (10) gekoppeltes Bremspedal wirkende pedalbetätigungskraft erfassenden Kraftsensor (28), der mit mit der elektronischen Steuereinrichtung (ECU) verbunden ist, dadurch gekennzeichnet, daß
- die elektronische Steuereinrichtung (ECU) dazu eingerichtet ist, nach einer Auslösung einer automatischen Bremsung eine Rücknahme der Bremsung in Abhängigkeit von einer Verringerung der auf das Bremspedal wirkenden pedalbetätigungskraft zu bewirken.

2. Elektronisch gesteuerte Fahrzeugbremsanlage nach Anspruch 1, dadurch gekennzeichnet, daß
- die elektronische Steuereinrichtung (ECU) dazu eingerichtet ist, die Rücknahme der Bremsung bei Erreichen eines vorbestimmten Schwellwertes der auf das Bremspedal wirkenden Pedalbetätigungskraft zu bewirken.

3. Elektronisch gesteuerte Fahrzeugbremsanlage nach Anspruch 1, dadurch gekennzeichnet, daß die elektronische Steuereinrichtung (ECU) dazu eingerichtet ist,
- von dem Kraftsensor (28) kommende Signale permanent zu erfassen, in Datenwerte umzuwandeln und diese Datenwerte in einem Speicher (S) abzuspeichern,
- aus den abgespeicherten Datenwerten einen unmittelbar vor einer Auslösung der automatischen Bremsung erreichten Datenwert als momentanen Schwellwert zu bestimmen, und
- bei Verringerung der nach dem Auslösen der automatischen Bremsung aus den erfaßten Signalen umgewandelten Datenwerte auf den momentanen Schwellwert die Rücknahme der automatischen Bremsung zu bewirken.

4. Elektronisch gesteuerte Fahrzeugbremsanlage nach Anspruch 3, dadurch gekennzeichnet, daß die elektronische Steuereinrichtung (ECU) dazu eingerichtet ist,
- bei der Rücknahme der automatischen Bremsung die momentan auf das Bremspedal wirkende Pedalbetätigungskraft als Maß für die auf die Fahrzeugbremsen auszuübende Bremskraft heranzuziehen.

5. Elektronisch gesteuerte Fahrzeugbremsanlage nach Anspruch 4, dadurch gekennzeichnet, daß die elektronische Steuereinrichtung (ECU) dazu eingerichtet ist,
- eine Verringerung der auf die Fahrzeugbremsen auszuübende Bremskraft von der während der automatischen Bremsung ausgeübten Bremskraft auf die durch die aktuelle Bremspedalbetätigung vorgegebene Bremskraft innerhalb einer vorbestimmten Zeitspanne zu bewirken.

6. Elektronisch gesteuerte Fahrzeugbremsanlage nach Anspruch 5, dadurch gekennzeichnet, daß die elektronische Steuereinrichtung (ECU) dazu eingerichtet ist,
- die vorbestimmte Zeitspanne in Abhängigkeit von der momentanen Fahrzeuggeschwindigkeit, Fahrzeugverzögerung oder Bremspedalbetätigungskraft festgelegt wird.

7. Elektronisch gesteuerte Fahrzeugbremsanlage nach Anspruch 4, dadurch gekennzeichnet, daß die elektronische Steuereinrichtung (ECU) dazu eingerichtet ist,
- die Verringerung der auf die Fahrzeugbremsen auszuübende Bremskraft von der während der automatischen Bremsung ausgeübten Bremskraft auf die durch die aktuelle Bremspedalbetätigung vorgegebene Bremskraft proportional zur momentanen Bremspedalbetätigungskraft auszuführen.

8. Verfahren zum Betrieb einer elektronisch gesteuerten Fahrzeugbremsanlage mit folgenden Schritten:
a) Erfassen einer Betätigungskraft, die auf ein Bremspedal ausgeübt wird, das mit einem Bremskraftverstärker gekoppelt ist, der eine elektromagnetisch betätigbare Steuerventilanordnung aufweist,
b) Auslösen einer automatischen Bremsung, wenn ein vorbestimmtes Kriterium (K) erfüllt ist, gekennzeichnet durch
c) Rücknehmen der automatischen Bremsung, wenn eine Verringerung der Pedalbetätigungskraft auftritt.

9. Verfahren zum Betrieb einer elektronisch gesteuerten Fahrzeugbremsanlage nach Anspruch 8, wobei
d) die Rücknahme der automatischen Bremsung dann eingeleitet wird, wenn eine Verringerung der Pedalbetätigungskraft um einen vorbestimmten Wert (dF) auftritt.

10. Verfahren zum Betrieb einer elektronisch gesteuerten Fahrzeugbremsanlage nach Anspruch 8, wobei
a1) die Pedalbetätigungskraft permanent erfaßt und,
c1) der Wert der Pedalbetätigungskraft unmittelbar vor der Auslösung einer automatischen Bremsung als momentaner Schwellwert bestimmt wird, und
c2) die automatische Bremsung zurückgenommen wird, wenn eine Verringerung der nach dem Auslösen der automatischen Bremsung erfaßten Pedalbetätigungskraft auf den momentanen Schwellwert erfaßt wird.

11. Verfahren zum Betrieb einer elektronisch gesteuerten Fahrzeugbremsanlage nach Anspruch 10, wobei
c3) bei der Rücknahme der automatischen Bremsung die momentan auf das Bremspedal wirkende Pedalbetätigungskraft als Maß für die auf die Fahrzeugbremsen auszuübende Bremskraft ausgewertet wird.

12. Verfahren zum Betrieb einer elektronisch gesteuerten Fahrzeugbremsanlage nach Anspruch 10, wobei
c4) die Verringerung der auf die Fahrzeugbremsen auszuübende Bremskraft von der während der automatischen Bremsung ausgeübten Bremskraft auf die durch die Pedalbetätigung vorgegebene Bremskraft innerhalb einer vorbestimmten Zeitspanne bewirkt wird.

13. Verfahren zum Betrieb einer elektronisch gesteuerten Fahrzeugbremsanlage nach Anspruch 12, wobei
c5) die Verringerung der auf die Fahrzeugbremsen auszuübende Bremskraft von der während der automatischen Bremsung ausgeübten Bremskraft auf die durch die Pedalbetätigung vorgegebene Bremskraft in Abhängigkeit von der momentanen Fahrzeuggeschwindigkeit, Fahrzeugverzögerung oder Bremspedalbetätigungskraft festgelegt wird.

14. Verfahren zum Betrieb einer elektronisch gesteuerten Fahrzeugbremsanlage nach Anspruch 12, wobei
c6) die Verringerung der auf die Fahrzeugbremsen auszuübende Bremskraft von der während der automatischen Bremsung ausgeübten Bremskraft auf die durch die Pedalbetätigung vorgegebene Bremskraft proportional zur momentanen Bremspedalbetätigungskraft ausgeführt wird.
